# EUROPÄISCHE PATENTSCHRIFT

(11) **EP 1 806 966 B1**
(45) Veröffentlichungstag und Bekanntmachung des Hinweises auf die Patenterteilung: **14.05.2008**
(21) Anmeldenummer: 05759902.9
(22) Anmeldetag: 22.06.2005
(51) Int. Cl.: A01K 89/01

(54) **WEITWURFSPULE FÜR ANGELROLLEN**
LONG-DISTANCE CASTING REEL FOR FISHING REELS
BOBINE LONGUE PORTEE DESTINEE A DES MOULINETS DE PECHE

(30) Priorität: 05.11.2004 DE 102004054033
(43) Veröffentlichungstag der Anmeldung: 18.07.2007
(73) Patentinhaber: Burk, Günther, 51674 Wiehl (DE)
(72) Erfinder: Burk, Günther, 51674 Wiehl (DE)
(74) Vertreter: Lippert, Stachow & Partner
(86) Internationale Anmeldenummer: PCT/DE2005/001115
(87) Internationale Veröffentlichungsnummer: WO 2006/047974

(56) Entgegenhaltungen:
- EP-A- 0 904 691
- DE-A1- 4 211 145
- US-A- 5 697 567
- US-A- 5 720 441

## Beschreibung

Die Erfindung betrifft eine Weitwurfspule für Angelrollen mit einem Spulenkörper, bestehend aus Spulenboden und beidseitigen Begrenzungsflanschen, wobei der in Ablaufrichtung hintere Begrenzungsflansch mit einer radial äußeren Spulenlippe versehen ist, über die eine in umfänglicher Aufspulrichtung senkrecht zur Spulenachse aufspulbare Angelschnur in Ablaufrichtung etwa parallel zur Spulenachse ablaufbar ist.

Mit Weitwurfspulen der eingangs genannten Art ist es möglich, einen mit dem freien Ende der auf der Weitwurfspule angeordneten Angelschnur verbundenen Angelköder an weit entfernte Stellen zu platzieren. Die Weitwurfspule ist üblicherweise mit ihrer Drehachse senkrecht zur Längsachse einer Angelrute in die Angelrolle angeordnet. Damit verläuft die umfängliche Aufspulrichtung senkrecht zur Drehachse der Weitwurfspule bzw. zur Längsachse der Angelrute. Beim Aufspulen der Angelschnur wird die Angelschnur über eine Umlenkeinrichtung von der in etwa parallel zur Drehachse verlaufenden Ablaufrichtung in die senkrecht zur Drehachse verlaufende Aufspulrichtung umgelenkt. Um beim Weitwurf möglichst große Weiten mit einem an dem freien Ende der Angelschnur befestigten Gewicht, Köder oder dergleichen zu erzielen, wird die Umlenkeinrichtung in der Regel so verschwenkt, dass die Angelschnur von der Weitwurfspule abspult und hierbei ohne Hilfe der Umlenkeinrichtung von der Weitwurfspule direkt über den Begrenzungsflansch bzw. über die Spulenlippe in Ablaufrichtung abläuft. Da das Abspulen und Ablaufen der Angelschnur über den Begrenzungsflansch erfolgt, ist der hintere Begrenzungsflansch als seitlicher Halt für die aufgespulte Angelschnur wesentlich, um ein unkontrolliertes Abwickeln mehrerer Angelschnurwindungen auf einmal von der Weitwurfspule zu verhindern, welches zu einer Verwicklung der Angelschnur in Form einer sogenannten Perückenbildung führen kann.

Einen entscheidenden Einfluss auf die erzielbare Weite, mit der der Angelköder ausgeworfen werden kann, bilden die Reibungsverhältnisse zwischen dem hinteren Begrenzungsflansch bzw. der Spulenlippe und Angelschnur. Zur Verminderung des Reibungswiderstandes wird bei neueren Weitwurfspulen der Begrenzungsflansch mit der Spulenlippe im Durchmesser verkleinert. Damit jedoch das Angelschnurfassungsvermögen erhalten bleibt, wird der Spulenboden in seiner Längserstreckung vergrößert. Hierdurch wird jedoch nicht das Hauptproblem gelöst, nämlich das des Reibungswiderstandes an der Spulenlippe. Je mehr Angelschnur von der Weitwurfspule läuft, desto größer wird der Abstand von der aktuellen Oberseite der aufgespulten Angelschnur zur Spulenlippe. Bei gefüllter Weitwurfspule, unmittelbar nach dem Abwurf, ist der Reibungswiderstand am geringsten. Mit abnehmender verbleibender Schnurmenge auf der Weitwurfspule vergrößert sich der Widerstand an der Spulenlippe und die Angelschnur wird stark abgebremst.

Zur Verminderung der Reibung wird in DE 4 211 145 A1 vorgeschlagen, dass die Angelschnur auf der Weitwurfspule seitlich durch zwei radial aneinander gegenüberliegende Segmente gehalten wird, die mit einem Ende schwenkbar an der Weitwurfspule federnd gelagert sind. Hierdurch soll erreicht werden, dass die ablaufende Schnur die Segmente gegen den Federdruck radial nach innen drückt, sodass mit abnehmender Schnurmenge der radiale Abstand von der radialen Oberseite der aktuellen Schnurmenge auf der Weitwurfspule zum Segment immer gleichmäßig gering bleiben soll. Nach DE 4 211 145 A1 wird erwartet, dass hierdurch der Reibungswiderstand wesentlich geringer ist und die Schnur weniger abgebremst wird. Es kann jedoch angenommen werden, dass sich die im Bereich der Segmente aufgespulte Angelschnur zwischen den Segmenten spannt, so dass es zumindest in diesem Bereich zu einer gestörten Aufspulform der Angelschnur kommen kann, welche beim Abwickeln zumindest zu einer erhöhten Reibung, wenn nicht sogar zu einem unordnungsgemäßen Ablaufen der Angelschnur mit der o.a. Perückenbildung als Folge führen kann.

Aufgabe der vorliegenden Erfindung ist daher, eine Weitwurfspule der eingangs genannten Art bereitzustellen, bei der der Reibungswiderstand zwischen ablaufender Angelschnur und Spulenlippe verringert ist.

Erfindungsgemäß wird die gestellte Aufgabe durch die Merkmale des Anspruchs 1 gelöst, so dass die Spulenlippe eine Mehrzahl gleichmäßig über den Umfang verteilt angeordnete Haltestege aufweist, dass die Haltestege jeweils mit ihrem Fußende fest mit dem Spulenkörper verbunden sind, dass sich die freien Enden der Haltestege schräg entgegen der Aufspulrichtung erstrecken und dass die Haltestege eine radial äußere, als Steglippe ausgebildete Längsseite aufweisen.

Hierdurch nimmt die ablaufende Angelschnur nur noch an den Steglippen und hierbei insbesondere im Bereich der freien Stegenden Reibung auf, sodass der Reibungswiderstand wesentlich geringer und dadurch die Angelschnur entsprechend vermindert abgebremst wird. Somit lassen sich mit der erfindungsgemäßen Weitwurfspule größere und genauere Wurfweiten erzielen, ohne dass höhere Wurfgewichte verwendet werden müssen.

Die Haltestege können mit einem in Ablaufrichtung der aufspulbaren Angelschnur schrägen Überlaufbogen versehen sein. Durch diesen Überlaufbogen wird ein sanfteres, übergangsfreies und damit reibungsfreieres Abgleiten der Angelschnur an den Haltestegen erzielt. Hierbei weist der Überlaufbogen bevorzugt einen steten, d.h. einen ohne Sprünge, Absätze oder dergleichen versehenen, Verlauf auf. Um die Reibung zu verringern, ist bevorzugt zumindest die Fläche des Überlaufbogens poliert, die als Lauffläche für das Ablaufen der Angelschnur vorgesehen ist.

In einer Weiterbildung der Weitwurfspule sind mindestens vier Haltestege vorgesehen. Ist die Anzahl der Haltestege zu gering, so besteht die Gefahr, dass die Abstände zwischen den Haltestegen zu groß werden, sodass sich die Angelschnur zwischen den Haltestegen stark spannen und unordnungsgemäß aufgespult werden kann.

Bevorzugt sind mindestens neun Haltestege vorgesehen. Hierbei hat sich gezeigt, dass bei neun Haltestegen ein bestimmtes Optimum in Hinsicht der Funktionen der Haltestege erzielt werden kann, indem die Haltestege die auf die Weitwurfspule aufgespulte Angelschnur halten und der ablaufenden Angelschnur einen möglichst geringen Reibungswiderstand entgegensetzen. Selbstverständlich kann auch eine geringere Anzahl von Haltestegen als vier, beispielsweise bei einem weiter verminderten Durchmesser des Spulenbodens, oder eine größere Anzahl als Neun, beispielsweise bei einem vergrößerten Durchmesser des Spulenbodens, vorgesehen sein und sich als optimal erweisen.

Es wird eine Ausbildung der Weitwurfspule bevorzugt, in der sich die Haltestege schräg entgegen der Aufspulrichtung der aufspulbaren Angelschnur in einem Stegwinkel kleiner 90° erstrecken, der am Fußende des jeweiligen Haltesteges zwischen der Umfangtangente und der Steigung der Steglippe oder der Längsachse des Haltesteges an seinem Fußende gebildet wird. Bevorzugt weist der Stegwinkel einen Wert zwischen 30° und 60°, bevorzugter einen Wert zwischen 40° und 50° und weiter bevorzugt einen Wert um 45° auf. Über den Stegwinkel wird das Ablaufverhalten der Angelschnur beeinflusst. Ist.der Stegwinkel größer oder gleich 90°, so besteht die Gefahr, dass die Angelschnur in dem Fußpunkt festhakt. Je geringer der Stegwinkel wird, desto leichter kann die Angelschnur von der Weitwurfspule ablaufen. Ist der Winkel sehr klein, so ist es, um ein vorteilhaft großes Spulenvolumen bereitzustellen, erforderlich, dass die Steglänge entsprechend groß ist, sodass hierüber die Reibung nachteilig vergrößert werden können. Von daher wird ein Stegwinkel mit einem mittleren Wert um 45° als ein Optimum betrachtet. Dies heißt jedoch nicht, dass sich nicht unter entsprechend anderen Reibungsverhältnissen zwischen Angelschnur und Spulenlippe bzw. Steglippe, ein entsprechend anderer Winkelwert als Optimum erweisen kann.

In einer Weiterbildung ist vorgesehen, dass der Fuß des Haltesteges zumindest an seiner in Aufspulrichtung hinteren Seite, d.h. am Übergang von der Weitwurfspule in die Steglippe, einen Übergang mit einem steten, geschwungenen Formverlauf ohne Absätze, Sprünge, Kanten oder dergleichen aufweist. Dies kann z.B. in Form einer Krümmung mit einem von der Weitwurfspule wegweisenden Krümmungsradius bzw. einer radial nach außen konkaven Krümmung erfolgen. Durch diesen Übergang kann der Haltesteg tangential aus dem hinteren Begrenzungsflansch hervorgehen, so dass der Stegwinkel bezüglich der Umfangtangente und der Steigung der Steglippe am Fußende des Haltesteges gleich Null wird, jedoch bezüglich der Umfangstangente und der Steigung der Längsachse des Haltesteges an seinem Fußende ungleich Null bleibt.

Bevorzugt kann die Steglippe über ihre Längserstreckung einen stetig gekrümmten Verlauf aufweisen, dessen Krümmungsradius zumindest mit einer Richtungskomponente zum Spulenboden hin weist. Somit ist die Steglippe radial nach außen konvex gekrümmt. Hierdurch kann wiederum, im Vergleich zu einem geraden Verlauf mit konstanter Steigung, eine Verminderung der Reibung erzielt werden.

Ferner wird bevorzugt, dass das freie Stegende den Spulenboden radial am weitesten überragt. Damit wird verhindert, dass das freie Stegende mit seiner Unterseite evtl. als Widerhaken oder dergleichen wirken kann und somit eine Gefahr gegen ein ordnungsgemäßes Ablaufen der Angelschnur bilden kann. Hierbei soll jedoch der hintere Flansch mit seinen Haltestegen den Spulenboden bevorzugt höchstens soweit wie der in Ablaufrichtung vordere Flansch der Weitwurfspule radial überragen.

Bevorzugt können die Haltestege jeweils eine dreieckige Form aufweisen, deren eine Spitze das freie Stegende bildet und deren der Spitze gegenüberliegende Seite fest mit der Weitwurfspule verbunden ist. Somit weist der Haltesteg an seinem Fuß, an dem erwartungsgemäß maximale Kraftmomente auftreten, einen maximalen Querschnitt und an seiner Spitze, an der erwartungsgemäß minimale Kraftmomente auftreten, einen minimalen Querschnitt auf, sodass die Form dem zu erwartenden Kraftmomentenverlauf in etwa angepasst ist.

In einer Weiterbildung der Weitwurfspule können die Haltestege jeweils als Dreieck mit einer sichelförmigen Spitze ausgebildet sein, die das freie Ende der Haltestege bildet. Hierdurch ergibt sich eine Form ähnlich einer Haifischrückenflosse, wobei die der Steglippe gegenüberliegende freie Stegseite einen ähnlichen gekrümmten Verlauf wie den der Steglippe aufweist. Hiermit wird eine weitere Optimierung der Stegform in Hinsicht auf erforderliche Festigkeit des Haltesteges sowie Minimierung der Reibungsverhältnisse zwischen Steglippe und Angelschnur erzielt, da, im Vergleich zur Dreiecksform mit geraden Seiten, die Seitenfläche des Haltesteges, an die die aufspulbare Angelschnur zur Anlage kommt, im Fußbereich vermindert ist, wodurch die Reibungsfläche und damit die mögliche Reibungskraft in diesem Bereich vermindert wird, während das freie Ende über einen ausreichende, seine Festigkeit bestimmenden Querschnitt verfügt. Ist in einer Weiterbildung zusätzlich ein oben näher erläuterter Übergang im Profilverlauf des aus dem Spulenkörper hervorgehenden Haltesteges in Form einer bezüglich des Spulenkörpers konkaven Profillinie vorgesehen, die stetig in das konvexe Steglippenprofil übergeht, so ergibt ein etwa S-förmiger Verlauf der Steglippe. Bevorzugt geht das andere Ende der Profillinie hierbei in einem stetig gebogenen Verlauf in die der Steglippe 9 abgewandten Seite des nächsten benachbarten Haltesteges 7 über.

Bevorzugt können die Steglippen in Ablaufrichtung der aufspulbaren Angelschnur angeschliffen sein. Hierbei kann der Anschliff ähnlich einem einseitig angeschliffenen Messer, jedoch bevorzugt mit in Querschnittsansicht gebogenen Schliffverlauf erfolgen. Zudem wird eine abgerundete Spitze bevorzugt. Ferner ist bevorzugt vorgesehen, dass die Schliffkante zwischen dem abgerundeten Schliffverlauf und der nicht abgeschliffenen Seite des Haltesteges leicht abgerundet ist, um einer möglichen Verletzungsgefahr entgegenzuwirken. Durch diese weitere Optimierung der Haltestege bzw. der Steglippen wird weiterhin eine Reduzierung der Reibung zwischen Angelschnur und Steglippe erzielt.

Der Durchmesser des Spulenbodens kann zu dem Begrenzungsflansch mit den Haltestegen hin abnehmen und hierbei bevorzugt linear abnehmen. Hierdurch entsteht eine umfängliche schiefe Ebene, auf der die aufspulbare Angelschnur mit einer Kraftkomponente gegen den Haltesteg drängt, wodurch ein ordnungsgemäßes Auf- und Abspulen der Angelschnur erleichtert wird.

Die Haltestege können lösbar an dem hinteren Begrenzungsflansch befestigt sein. Dies bietet den Vorteil, dass die Haltestege einzeln oder insgesamt auswechselbar sind, wodurch beispielsweise die gewünschte Anzahl an Haltestegen auf dem hinteren Flansch verändert, Haltestege mit einer anderen Form oder einem anderen Werkstoffaufbau eingesetzt oder schadhafte Haltestege ausgewechselt werden können. Hierbei können die Haltestege mit dem hinteren Begrenzungsflansch verschraubt sein.

Der hintere Begrenzungsflansch kann lösbar mit der Weitwurfspule verbunden sein. Hierbei kann der hintere Befestigungsflansch als eigenständiges Bauteil gefertigt sein, das lösbar in die Weitwurfspule einbaubar ist. Dadurch kann der hintere Befestigungsflansch beispielsweise gegen einen Befestigungsflansch mit einer anderen Anzahl von Haltestegen, mit anders geformten Haltestege oder mit Haltestegen aus einem besonders verschleißfesten und/oder reibungsarmen Werkstoff ausgetauscht oder, im Beschädigungsfalle, durch einen gleichen Befestigungsflansch ersetzt werden. Als Werkstoff zur Minimierung der Reibungsverluste zwischen Angelschnur und Befestigungsflansch käme beispielsweise Teflon in Betracht. Um ein Auswechseln des hinteren Befestigungsflansches zu ermöglichen, kann der hintere Befestigungsflansch beispielsweise als Scheibe ausgebildet sein, die stirnseitig auf die Weitwurfspule aufschiebbar und fixierbar ist. Insbesondere kann die Weitwurfspule einen üblichen dreiteiligen Aufbau, hinterer Begrenzungsflansch, Spulenboden mit vorderem Begrenzungsflansch und Befestigungsvorrichtung zum seitlichen Anpressen und/oder Festklemmen des hinteren Befestigungsflansches gegen die Stirnseite des Spulenbodens, aufweisen.

In einer alternativen Ausbildungsform kann die Weitwurfspule einstückig hergestellt sein, wodurch die Herstellungskosten gesenkt werden können. Hierbei kann Aluminium als leichter Werkstoff bevorzugt eingesetzt werden. Ferner wird das Aluminiumdruckgussverfahren als kostengünstiges Herstellungsverfahren für die Weitwurfspule bevorzugt. Zur weiteren Reibungsverminderung kann bevorzugt zumindest die Oberfläche der Steglippe poliert sein.

Die Haltestege können zudem aus einem reibungsvermindernden Werkstoff hergestellt oder mit einem reibungsvermindernden Werkstoff beschichtet sein. Als Werkstoff kann beispielsweise anodisiertes Aluminium verwendet werden, das bevorzugt zumindest an der Steglippe glattpoliert ist. Als reibungsvermindernder Beschichtungswerkstoff kommt beispielsweise Teflon in.Betracht.

Im Folgenden werden zwei Ausführungsbeispiele der vorliegenden Erfindung anhand einer zugehörigen Zeichnung näher erläutert. In der Zeichnung zeigen
- Fig. 1: in einer stirnseitigen Ansicht eine Weitwurfspule in einer ersten Ausführungsform,
- Fig. 2: in einer Seitenansicht die Weitwurfspule gemäß Figur 1,
- Fig. 3: in einer Querschnittsansicht einen Haltesteg gemäß dem Schnittverlauf III-III in Fig. 1 und
- Fig. 4: in einer stirnseitigen Ansicht die Weitwurfspule in einer zweiten Ausführungsform.

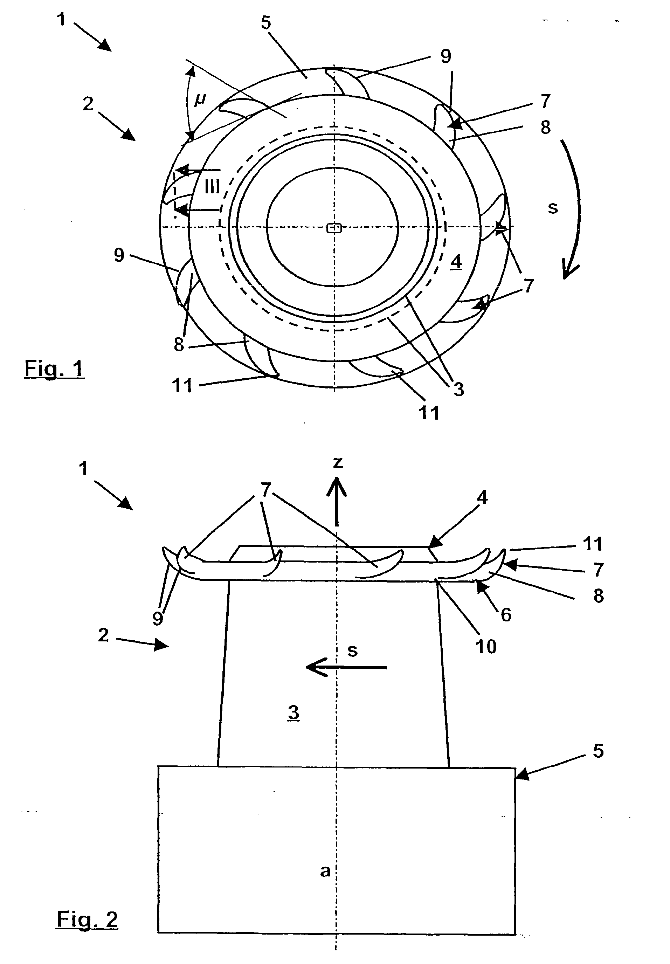

In Fig. 1 bzw. in Fig. 2 wird eine erste Ausführungsform einer Weitwurfspule 1 für Angelrollen in einer stirnseitigen Ansicht bzw. einer Seitenansicht gezeigt. Die Weitwurfspule 1 weist einen Spulenkörper 2 mit einem Spulenboden 3 und beidseitigen Begrenzungsflanschen 4,5 auf, einen in Ablaufrichtung z einer hier nicht dargestellten Angelschnur hinteren Begrenzungsflansch 4 und einen in Ablaufrichtung z der hier nicht dargestellten Angelschnur vorderen Begrenzungsflansch 5. Der hintere Begrenzungsflansch 4 ist mit einer radial äußeren Spulenlippe 6 versehen.

Es ist vorgesehen, dass die hier nicht dargestellte Angelschnur in einer umfänglichen Aufspulrichtung s senkrecht zur Spulenachse a auf die Weitwurfspule 1 aufspulbar ist. Ferner ist die Weitwurfspule so konzipiert, dass sie in Einbaulage mit ihrer Spulenachse a etwa parallel zur Längsachse einer hier nicht dargestellten Angelrute angeordnet ist, wobei die Angelschnur beim Aufspulen von der Ablaufrichtung z in Richtung der Angelrutenlängsachse über eine hier nicht dargestellte Umlenkeinrichtung in Aufspulrichtung s und damit etwa senkrecht zur Ablaufrichtung z umlenkbar ist.

Um Reibungsverluste zu vermeiden, ist hingegen beim Weitwurf eines Angelköders oder dergleichen an dem freien Ende der Angelschnur durch die Weitwurfspule 1 vorgesehen, dass die hier nicht dargestellte Angelschnur in Ablaufrichtung z etwa parallel zur Spulenachse a direkt über die radial äußere Spulenlippe 6 ablaufen kann, ohne über die Umlenkeinrichtung umgelenkt zu werden. Der hintere Begrenzungsflansch 4 ist als Halte- und Führungseinrichtung notwendig, um ein ordnungsgemäßes Ablaufen der Angelschnur über den Begrenzungsflansch 4 zu gewährleisten. Um möglichst große Wurfweiten zu erzielen, sind die Reibungsverluste am hinteren Begrenzungsflansch 4 zu minimieren.

Zur Verminderung der Reibung zwischen hier nicht dargestellter Angelschnur und Spulenlippe 6 während des Ablaufvorganges beim Weitwurf ist vorgesehen, dass die Spulenlippe 6 neun gleichmäßig über den Umfang angeordnete Haltestege 7 aufweist, die jeweils mit ihrem Fußende 6 fest mit der Weitwurfspule 1 verbunden sind und sich mit ihrem freien Ende schräg entgegen der umfänglichen Aufspulrichtung s erstrecken. Die jeweilige radial äußere Längsseite der Haltestege 7 ist als Steglippe 9 ausgebildet, über die die hier nicht dargestellte Angelschnur beim Weitwurf abläuft. Hierbei nimmt die ablaufende Angelschnur nur noch an den Steglippen 9 und, unter anderem abhängig von der verbleibenden Schnurmenge auf der Weitwurfspule 1, lediglich im Bereich der freien Stegenden Reibung auf, wodurch die Reibung insgesamt geringer ist und die Angelschnur entsprechend vermindert abgebremst wird. Daher können mit der erfindungsgemäßen Weitwurfspule 1 im Vergleich zu herkömmlichen Weitwurfspulen mit gleichen Wurfgewichten größere und genauere Wurfweiten erreicht werden.

Der die Steglippe 9 aufweisende hintere Begrenzungsflansch 4 ist mit einem Überlaufbogen 10 versehen, der in die Haltestege 7 übergeht, der sich in Ablaufrichtung z schräg erstreckt und über den die ablaufbare Angelschnur in einem sanften, reibungsmindernden Verlauf in Ablaufrichtung z umgelenkt und gestützt wird. In der hier dargestellten Ausführungsform der Weitwurfspule 1 ist der Überlaufbogen 10 in etwa als Kreisbogen ausgebildet. Anstatt dieser Kreisbogenform kann der Überlaufbogen einen anderen steten Verlauf, d.h. einen Verlauf ohne Sprünge, Absätze oder dergleichen, wie beispielsweise einen parabelförmigen oder ovalbogenförmigen Verlauf, aufweisen.

Die neun Haltestege 7 sind über den Umfang gleichmäßig verteilt, d.h. in einem Querschnitt auf der Weitwurfspule 1 in gleichen Kreisbogenabständen angeordnet, die einem hier nicht eingezeichneten Kreiswinkel von 40° entsprechen. Dabei stellt die hier vorgestellte Anzahl der Haltestege 7 bei den geometrischen Verhältnissen ein bestimmtes Optimum in Hinsicht auf die Reibung der hier nicht dargestellten Angelschnur an den Haltestegen 7 und in Hinsicht auf die notwendige Haltefunktion der Haltestege 7 zum ordnungsgemäßen Auf- und Abspulen der Angelschnur auf die Weitwurfspule 1, seitlichen Halten der Angelschnur auf der Weitwurfspule und ordnungsgemäßen Ablaufen der Angelschnur in Ablaufrichtung z über die Steglippen dar.

Die Haltestege 7 erstrecken sich entgegen der Aufspulrichtung s in einem Stegwinkel p, der am Fußende 6 des jeweiligen Haltesteges 7 zwischen der in Fig. 1 eingezeichneten Umfangtangente und der Steigung der Steglippe 9 am Fußende 6 gebildet wird. Hierbei ist der Stegwinkel µ bevorzugt kleiner 90°, da ansonsten die Gefahr besteht, dass sich die hier nicht dargestellte Angelschnur beim Ablaufen in Ablaufrichtung z an dem Fußende festhaken oder festsetzen kann. Der Stegwinkel µ soll 30° bis 60°, bevorzugt 40° bis 50° und bevorzugter um 45° betragen. In dem hier gezeigten Beispiel beträgt der Stegwinkel µ etwa 50°.

Die Haltestege 7 weisen eine etwa dreieckige Form mit ähnlich gebogenen Seiten, die zu einer sichelförmigen Spitze 11 gleich einer Haifischrückenflosse zusammenlaufen. Diese Form wird als vorteilhaft angesehen, da sie, im Vergleich zu einem Dreieck mit geraden Seiten, im Bereich des Fußendes verhältnismäßig schmal mit entsprechend geringer Reibungsfläche ist und im Bereich des freien Endes einen Querschnitt mit ausreichender Festigkeit aufweist. Die Spitzen 11 selbst sind gerundet ausgebildet, um keine Verletzungsgefahr zu bilden.

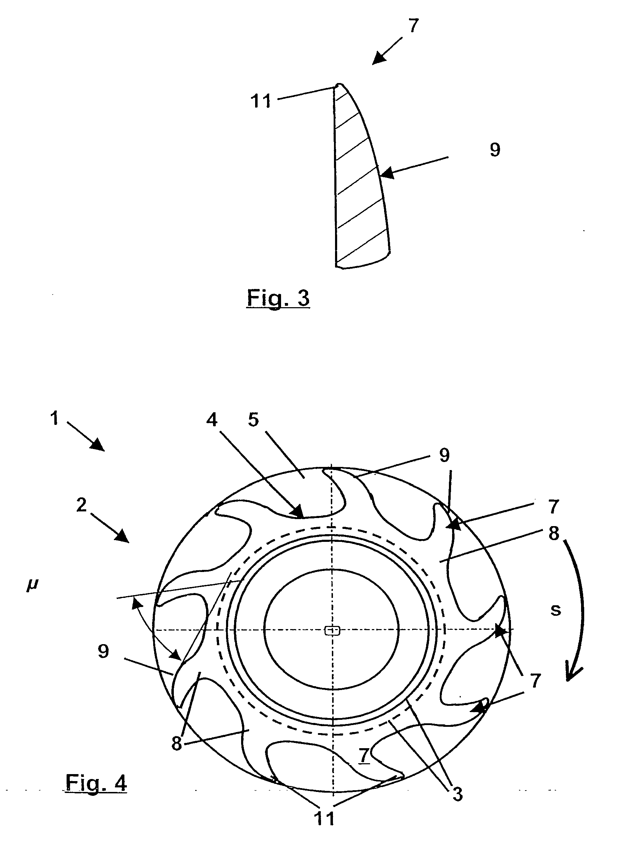

Wie in Fig. 3, einer Schnittdarstellung III-III aus Fig. 1, gezeigt, ist der Haltesteg 7 mit seiner Steglippe 9 in Ablaufrichtung z angeschliffen, wobei der Schliffverlauf gerundet ist und eine gerundete Kante aufweist, um einer Verletzungsgefahr entgegenzuwirken. Die Rundung des Schliffverlaufes ist in diesem Ausführungsbeispiel in etwa der eines Ovals, kann jedoch auch beispielsweise etwa parabelförmig sein oder einen anderen Verlauf mit einer vom Fußende zur Spitze hin schwächer werdenden Krümmung aufweisen.

Wie insbesondere aus Fig. 2 deutlich entnehmbar, nimmt der Durchmesser des Spulenbodens 3 zu den Haltestegen 7 hin linear ab. Da sich hierdurch eine umfängliche schiefe Ebene ausbildet, die in Ablaufrichtung z geneigt ist, wird eine hier nicht dargestellte, auf der Weitwurfspule 1 aufgespulte Angelschnur leicht gegen den Begrenzungsflansch 4 mit den Haltestegen 7 gedrückt, wodurch die Angelschnur leichter ordnungsgemäß in Ablaufrichtung z ablaufen kann.

In Figur 4 wird eine zweite Ausführungsform der Weitwurfspule in einer stirnseitigen Ansicht gezeigt. Hierbei unterscheidet sich die zweite Ausführungsform von der oben beschriebenen ersten durch die besondere Ausbildung der Haltestege 7 bzw. der Fußenden 8 der Haltestege 7, die, im Vergleich zur ersten Ausbildungsform gemäß Figur 1, radial tiefer in den hinteren Begrenzungsflansch 4 eingreifen und einen anderen Übergang zum hinteren Begrenzungsflansch 4 aufweisen.

In der ersten Ausführungsform gemäß Figur 1 gehen die Haltestege 7 ohne Übergang aus dem hinteren Begrenzungsflansch 4 hervor, wodurch sich an dem jeweiligen Fußende 8 der Haltestege 7 eine Kante zum hinteren Begrenzungsflansch ausbildet. In der in Figur 4 gezeigten zweiten Ausführungsform hingegen ist ein Übergang vorgesehen, durch den Sprünge, Kanten oder dergleichen vermieden werden, so dass die hier nicht weiter dargestellte Angelschnur ungehinderter und reibungsfreier über die Steglippen 9 ablaufen kann. Der Übergang weist hier einen radial nach innen gewölbten Verlauf bzw. eine konkave Linie auf, die mit ihrem einen Ende stetig in die anhand von Figur 1 erläuterte konvexe Steglippenform übergeht, sodass sich ein etwa S-förmiger Verlauf der Steglippe ergibt. Das andere Ende der Linie geht in einem stetig gebogenen Verlauf in die der Steglippe 9 abgewandten Seite des nächsten benachbarten Haltesteges 7 über, sodass der hintere Begrenzungsflansch 4 insgesamt ein radial äußeres Profil ähnlich eines Sägeblattes aufweist.

Selbstverständlich kann auch vorgesehen sein, dass die Haltestege radial nicht so tief in den hinteren Begrenzungsflansch 4 eingreifen, sodass die unteren Lagen einer aufspulbaren Angelschnur seitlich durch die umfänglich durchgehende Seitenwand des hinteren Begrenzungsflansches gehalten werden. Die Haltestege können jedoch auch so ausgebildet sein, dass sie radial bis zu dem Spulenboden hin in den hinteren Begrenzungsflansch eingreifen.

### Bezugszeichenliste

- 1: Weitwurfspule
- 2: Spulenkörper
- 3: Spulenboden
- 4: hinterer Begrenzungsflansch
- 5: vorderer Begrenzungsflansch
- 6: Spulenlippe
- 7: Haltesteg
- 8: Fußende
- 9: Steglippe
- 10: Überlaufbogen
- 11: Spitze
- a: Spulenachse
- s: Aufspulrichtung
- z: Ablaufrichtung
- µ: Stegwinkel

## Patentansprüche

1. Weitwurfspule für Angelrollen mit einem Spulenkörper (2), bestehend aus Spulenboden (3) und beidseitigen Begrenzungsflanschen (4, 5), wobei der in Ablaufrichtung weisende Begrenzungsflansch (4) mit einer radial äußeren Spulenlippe (6) versehen ist, über die eine in umfänglicher Aufspulrichtung (s) senkrecht zur Spulenachse (a) aufspulbare Angelschnur in Ablaufrichtung (z) etwa parallel zur Spulenachse (a) ablaufbar ist, **dadurch gekennzeichnet, dass** die Spulenlippe (6) eine Mehrzahl gleichmäßig über den Umfang verteilt angeordnete Haltestege (7) aufweist, dass die Haltestege (7) jeweils mit ihrem Fußende (8) fest mit dem Spulenkörper (2) verbunden sind, dass sich die freien Enden der Haltestege (7) schräg entgegen der Aufspulrichtung (s) erstrecken und dass die Haltestege (7) eine radial äußere, als Steglippe (9) ausgebildete Längsseite aufweisen.

2. Weitwurfspule nach Anspruch 1, **dadurch gekennzeichnet, dass** die Haltestege (7) mit einem sich in Ablaufrichtung (z) der auf der Weitwurfspule anordenbare Angelschnur schräg erstreckenden Überlaufbogen (10) versehen sind.

3. Weitwurfspule nach Anspruch 1 oder 2, **dadurch gekennzeichnet, dass** mindestens vier Haltestege (7) vorgesehen sind.

4. Weitwurfspule nach einem der Ansprüche 1 bis 3, **dadurch gekennzeichnet, dass** mindestens neun Haltestege (7) vorgesehen sind.

5. Weitwurfspule nach einem der Ansprüche 1 bis 4, **dadurch gekennzeichnet, dass** sich die Haltestege (7) in einem Stegwinkel (µ) kleiner 90° von dem Spulenkörper (2) erstrecken, wobei der Stegwinkel (µ) am Fußende (8) des jeweiligen Haltesteges (7) zwischen der Umfangtangente und der Steigung der Steglippe (9) gebildet wird.

6. Weitwurfspule nach Anspruch 5, **dadurch gekennzeichnet, dass** der Stegwinkel (µ) einen Wert zwischen 30° und 60° aufweist.

7. Weitwurfspule nach Anspruch 5 oder 6, **dadurch gekennzeichnet, dass** der Stegwinkel (µ) einen Wert zwischen 40° und 50° aufweist.

8. Weitwurfspule nach einem der Ansprüche 5 bis 7, **dadurch gekennzeichnet, dass** der Stegwinkel (µ) um 45° beträgt.

9. Weitwurfspule nach einem der Ansprüche 1 bis 8, **dadurch gekennzeichnet, dass** die Steglippe (9) einen stetig gekrümmten Verlauf aufweist, dessen Krümmungsradius zumindest mit einer Richtungskomponente zum Spulenboden (3) hin weist.

10. Weitwurfspule nach einem der Ansprüche 1 bis 9, **dadurch gekennzeichnet, dass** die Haltestege (7) jeweils eine dreieckige Form aufweisen, deren eine.Spitze (11) das freie Stegende bildet und deren der Spitze (11) gegenüberliegende Seite fest mit der Weitwurfspule (1) verbunden ist.

11. Weitwurfspule nach Anspruch 10, **dadurch gekennzeichnet, dass** die Haltestege (7) jeweils als Dreieck mit einer sichelförmigen Spitze (11) ausgebildet sind.

12. Weitwurfspule nach einem der Ansprüche 1 bis 11, **dadurch gekennzeichnet, dass** die Steglippen (9) in Ablaufrichtung (z) der aufspulbaren Angelschnur angeschliffen sind.

13. Weitwurfspule nach einem der Ansprüche 1 bis 12, **dadurch gekennzeichnet, dass** der Durchmesser des Spulenbodens (3) zu dem hinteren Begrenzungsflansch (4) mit den Haltestegen (7) hin abnimmt.

14. Weitwurfspule nach einem der Ansprüche 1 bis 13, **dadurch gekennzeichnet, dass** die Haltestege (7) lösbar an dem hinteren Begrenzungsflansch (4) befestigt sind.

15. Weitwurfspule nach einem der Ansprüche 1 bis 14, **dadurch gekennzeichnet, dass** der hintere Begrenzungsflansch (4) lösbar mit der Weitwurfspule (1) verbunden ist.

16. Weitwurfspule nach einem der Ansprüche 1 bis 13, **dadurch gekennzeichnet, dass** die Weitwurfspule (1) einstückig hergestellt ist.

17. Weitwurfspule nach einem der Ansprüche 1 bis 16, **dadurch gekennzeichnet, dass** die zumindest die Haltestege (7) aus einem reibungsvermindernden Werkstoff hergestellt oder mit einem reibungsvermindernden Werkstoff beschichtet sind.

## Claims

1. Long-distance casting spool for fishing reels, with a spool body (2) comprising a spool base (3) and limit flanges (4, 5) on both sides, where the limit flange (4) pointing in the run-off direction is provided with a radially outer spool lip (6), via which a fishing line that can be wound up in the circumferential winding direction (s) perpendicular to the spool axis (a) can run off in the run-off direction (z) roughly parallel to the spool axis, **characterised in that** the spool lip (6) displays a number of retaining fins (7), distributed evenly over the circumference, **in that** the base end (8) of each retaining fin (7) is permanently connected to the spool body (2), **in that** the free ends of the retaining fins (7) extend obliquely in the direction opposite the winding direction (s), and **in that** the retaining fins (7) have a radially outer, longitudinal side designed as a fin lip (9).

2. Long-distance casting spool according to Claim 1, **characterised in that** the retaining fins (7) are provided with a run-off arch (10) inclined in the run-off direction (z) of the fishing line arrangeable on the long-distance casting spool.

3. Long-distance casting spool according to Claim 1 or 2, **characterised in that** at least four retaining fins (7) are provided.

4. Long-distance casting spool according to one of Claims 1 to 3, **characterised in that** at least nine retaining fins (7) are provided.

5. Long-distance casting spool according to one of Claims 1 to 4, **characterised in that** the retaining fins (7) extend from the spool body (2) at a fin angle (µ) of less than 90°, said fin angle (µ) being formed at the base end (8) of the respective retaining fin (7), between the circumferential tangent and the slope of the fin lip (9).

6. Long-distance casting spool according to Claim 5, **characterised in that** the fin angle (µ) has a value between 30° and 60°.

7. Long-distance casting spool according to Claim 5 or 6, **characterised in that** the fin angle (µ) has a value between 40° and 50°.

8. Long-distance casting spool according to one of Claims 5 to 7, **characterised in that** the fin angle (µ) is in the region of 45°.

9. Long-distance casting spool according to one of Claims 1 to 8, **characterised in that** the fin lip (9) displays a continuously curved profile, at least one direction component of whose radius of curvature points towards the spool base (2).

10. Long-distance casting spool according to one of Claims 1 to 9, **characterised in that** the retaining fins (7) in each case display a triangular shape, one tip (11) of which forms the free fin end and the side of which opposite the tip (11) is permanently connected to the long-distance casting spool (1).

11. Long-distance casting spool according to Claim 10, **characterised in that** the retaining fins (7) are in each case designed as a triangle with a sickle-shaped tip (11).

12. Long-distance casting spool according to one of Claims 1 to 11, **characterised in that** the fin lips (9) are ground in the run-off direction (z) of the windable fishing line.

13. Long-distance casting spool according to one of Claims 1 to 12, **characterised in that** the diameter of the spool base (3) decreases towards the rear limit flange (4) with the retaining fins (7).

14. Long-distance casting spool according to one of Claims 1 to 13, **characterised in that** the retaining fins (7) are attached to the rear limit flange (4) in detachable fashion.

15. Long-distance casting spool according to one of Claims 1 to 14, **characterised in that** the rear limit flange (4) is connected to the long-distance casting spool (1) in detachable fashion.

16. Long-distance casting spool according to one of Claims 1 to 13, **characterised in that** the long-distance casting spool (1) is manufactured in one piece.

17. Long-distance casting spool according to one of Claims 1 to 16, **characterised in that** at least the retaining fins (7) are manufactured from a friction-reducing material, or coated with a friction-reducing material.

## Revendications

1. Bobine longue portée destinée à des moulinets de pêche avec un corps de bobine (2) constitué d'un fond de bobine (3) et de deux flasques de délimitation (4, 5), respectivement de chaque côté, le flasque de délimitation (4) dirigé dans la direction de déroulement étant pourvu d'une lèvre de bobine (6) radialement externe au moyen de laquelle une ligne de pêche enroulable perpendiculairement à l'axe de bobine (a) dans la direction d'enroulement (s) peut être déroulée dans la direction de déroulement (z) sensiblement parallèle à l'axe de bobine (a), **caractérisée en ce que** la lèvre de bobine (6) présente une pluralité de segments de maintien (7) uniformément répartis sur la circonférence, **en ce que** les segments de maintien (7) sont respectivement solidement reliés au corps de bobine (2) par leur extrémité de base (8), **en ce que** les extrémités libres des segments de maintien (7) s'étendent obliquement à l'encontre de la direction d'enroulement (s) et **en ce que** les segments de maintien (7) présentent un côté longitudinal ayant la forme d'une lèvre de segment (9) radialement externe.

2. Bobine longue portée selon la revendication 1, **caractérisée en ce que** les segments de maintien (7) sont munis d'une courbure de dépassement (10) s'étendant obliquement dans la direction de déroulement (z) de la ligne de pêche qui peut être disposée sur la bobine longue portée.

3. Bobine longue portée selon la revendication 1 ou 2, **caractérisée en ce que** sont prévus au moins quatre segments de maintien (7).

4. Bobine longue portée selon l'une quelconque des revendications 1 à 3, **caractérisée en ce que** sont prévus au moins neuf segments de maintien (7).

5. Bobine longue portée selon l'une quelconque des revendications 1 à 4, **caractérisée en ce que** les segments de maintien (7) s'étendent dans un angle de segment (µ) inférieur à 90° du corps de bobine (2), sachant que l'angle de segment (µ) est formé au niveau de l'extrémité de base (8) du segment de maintien (7) respectif entre la tangente de la surface extérieure et l'inclinaison de la lèvre de segment (9).

6. Bobine longue portée selon la revendication 5, **caractérisée en ce que** l'angle de segment (µ) présente une valeur comprise entre 30° et 60°.

7. Bobine longue portée selon la revendication 5 ou 6, **caractérisée en ce que** l'angle de segment (µ) présente une valeur comprise entre 40° et 50°.

8. Bobine longue portée selon l'une quelconque des revendications 5 à 7, **caractérisée en ce que** l'angle de segment (µ) est de 45°.

9. Bobine longue portée selon l'une quelconque des revendications 1 à 8, **caractérisée en ce que** la lèvre de segment (9) présente un développement courbé en continu dont le rayon de courbure est tourné vers le fond de bobine (3) au moins avec un composant de direction.

10. Bobine longue portée selon l'une quelconque des revendications 1 à 9, **caractérisée en ce que** les segments de maintien (7) présentent respectivement une forme triangulaire dont une pointe (11) forme l'extrémité libre du segment et dont le côté opposé à la pointe (11) est relié fixement à la bobine longue portée (1).

11. Bobine longue portée selon la revendication 10, **caractérisée en ce que** les segments de maintien (7) sont à chaque fois réalisés en tant que triangle avec une pointe (11) en forme de croissant.

12. Bobine longue portée selon l'une quelconque des revendications 1 à 11, **caractérisée en ce que** les lèvres de segment (9) sont affûtées dans la direction de déroulement (z) de la ligne de pêche enroulable.

13. Bobine longue portée selon l'une quelconque des revendications 1 à 12, **caractérisée en ce que** le diamètre du fond de bobine (3) décroît en direction du flasque de délimitation arrière (4) avec les segments de maintien (7).

14. Bobine longue portée selon l'une quelconque des revendications 1 à 13, **caractérisée en ce que** les segments de maintien (7) sont fixés, de manière amovible, au niveau du flasque de délimitation arrière (4).

15. Bobine longue portée selon l'une quelconque des revendications 1 à 14, **caractérisée en ce que** le flasque de délimitation arrière (4) est relié, de manière amovible, à la bobine longue portée (1).

16. Bobine longue portée selon l'une quelconque des revendications 1 à 13, **caractérisée en ce que** la bobine longue portée (1) est monobloc.

17. Bobine longue portée selon l'une quelconque des revendications 1 à 16, **caractérisée en ce qu'**au moins les segments de maintien (7) sont fabriqués à partir d'un matériau réducteur de frottement ou revêtus d'un matériau réducteur de frottement.
